(19) **Europäisches Patentamt / European Patent Office / Office européen des brevets**

(11) **EP 3 007 109 B1**

(12) ## EUROPEAN PATENT SPECIFICATION

(45) Date of publication and mention
of the grant of the patent:
**07.12.2016 Bulletin 2016/49**

(51) Int Cl.:
***G06K 19/067*** (2006.01)

(21) Application number: **14187776.1**

(22) Date of filing: **06.10.2014**

(54) **INFORMATION CARRIER WITH IMPROVED DETECTION ACCURACY BY A MULTILAYER BUILD UP OF THE INFORMATION CARRIER**

DATENTRÄGER MIT VERBESSERTER NACHWEISGENAUIGKEIT DURCH EINEN MEHRSCHICHTIGEN AUFBAU DES INFORMATIONSTRÄGERS

SUPPORT D'INFORMATIONS AVEC UNE PRÉCISION DE DÉTECTION AMÉLIORÉE PAR UNE ACCUMULATION MULTICOUCHE DU SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2016 Bulletin 2016/15**

(73) Proprietor: **T-Touch International S.à r.l.**
**1857 Luxembourg (LU)**

(72) Inventors:
• **Weigelt, Karin**
  **09112 Chemnitz (DE)**
• **Förster, Matthias**
  **01307 Dresden (DE)**
• **Thiele, Jan**
  **09224 Chemnitz/Grüna (DE)**
• **Voigt, Sascha**
  **09337 Bernsdorf (DE)**

(74) Representative: **Hertin und Partner**
**Rechts- und Patentanwälte PartG mbB**
**Kurfürstendamm 54/55**
**10707 Berlin (DE)**

(56) References cited:
**WO-A1-2007/110486      WO-A1-2012/038434**

EP 3 007 109 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention:

The present invention relates to a capacitive, planar information carrier, the use of said information carrier and a method for the manufacture of said information carrier.

Background of the invention:

During the last years, there has been a rapid development for devices capable of storing information which additionally interact with touch screens. A touch screen is in particular a physical interface for sensing electrical capacitances or capacitance differences within sub-areas of a defined area. These touch screens are common in (but not limited to) smart phones, mobile phones, displays, tablet-PCs, tablet notebooks, graphic tablets, television devices, trackpads, touchpads, input devices, PDAs, and/or MP3 devices. Technologies to perform this detection include resistive, capacitive, acoustic and optical technologies. All these technologies are optimized to detect a human finger or a specially designed stylus that is brought into contact with a touch screen.

The prior art shows several ways of producing, with the aid of printing techniques or other coating processes, information carriers that can be read by touch screens. A commonly used approach is to apply a bar code on any kind of object. These bar codes can be sensed by suitable optic scanners or cameras which are often part of the devices including a touch screen. Although easy and economically to produce, bar codes have some disadvantageous, e.g. the fact that it is easy to generate a counterfeit by just copying the bar code. Thus, they are less safe than more sophisticated information storing devices. Furthermore, it may not be desirable for certain applications that the bar code covers a certain area of the object where the code is applied to and that it is visible to a user.

In WO 2011/154524 A1, a system for the transfer of information is disclosed. This system comprises a capacitive information carrier and a surface sensor by the virtue of which the above-mentioned disadvantageous of the prior art are overcome. The basic idea of the system is to use an information carrier comprising a pattern of electrically conductive and electrically non-conductive regions placed on a non-conductive substrate by printing. This pattern is referred to as a touch structure. As the touch screen technology is optimized to detect a human finger or a specially designed stylus that is brought into contact with a touch screen, this touch structure aims at imitating the properties and the arrangement of fingertips.

Furthermore, the invention comprises a process for acquiring information, comprising a capacitive information carrier, a capacitive surface sensor, a contact between the two elements, and an interaction which makes a touch structure of the information carrier evaluable for a data-processing system connected to the surface sensor and can trigger events that are associated with the information carrier. According to WO 2011/154524 A1, the information carrier has at least one electrically conductive layer arranged on an electrically non-conductive substrate.

An interaction between the information carrier and the capacitive surface sensor is achieved by bringing into contact the capacitive surface sensor and the information carrier. It is preferred that the contact is a static or dynamic contact. In the context of WO 2011/154524 A1, an information carrier is in particular a medium for the storage, replication, deposition and/or assignment of information. The capacitive information carrier of the WO 2011/154524 A1 comprises at least one electrically conductive layer, which is arranged as a touch structure on an electrically non-conductive substrate. The touch structure comprises of at least one coupling surface which is connected to at least one touch point via at least one conductive trace.

The combination of at least one or more touch points in a touch structure replicates the arrangement or properties of fingertips, wherein the property of the touch structure is described to the effect that said touch structure can execute an input on a surface sensor just like one or multiple fingers. Such a structure can be evaluated by a data-processing system connected to the surface sensor and processed by software technology. The system described in WO 2011/154524 A1 allows for reading out the information carrier by means of a surface sensor capacitively. The arrangement of at least one electrically conductive layer as a touch structure on an electrically non-conductive substrate which comprises at least one touch point, a coupling surface and/or a conductive trace gives a certain level of reproducibility and recognition precision throughout the whole recognition process. The detection precision, i.e. the relative position of touch points detected by the data-processing system compared to the physical relative position of the touch points on the capacitive information carrier, is limited. These limitations are due to the nature of capacitive reading. Not only the conductive areas representing the touch points cause a change in capacitance on the capacitive surface sensor, but also the conductive traces. Whereas the detection of the touch points is the desired effect of the invention described in WO 2011/154524 A1, the presence of the coupling surfaces and the conductive traces in particular is necessary for the functionality of the touch structure, but interfering in the detection process. The geometry of the conductive traces, i.e. their size and area, is designed in that way that these conductive traces will not trigger events by themselves, but the conductive traces shift the center of the detected touch points detected by the capacitive surface sensor. This causes slight deviations of the relative positions of the touch points detected by the touch screen compared to the physical relative position on the information carrier. These deviations have to be taken into account when setting the tolerances or minimal differences between similar touch structures.

In the context of WO 2011 /154524 A1, the conductive elements forming a touch structure can be put into two groups corresponding to their function, the touch points representing a first group and the coupling surface and the conductive traces representing a second group. The purpose of the touch points is to trigger events on the surface sensor therefore representing the conductive elements whose detection is desired in the context of WO 2011/154524 A1. These touch points will be referred to as desired elements in the context of the present application. The coupling surface and the conductive traces represent necessary, but interfering elements whose detection is not desired, but cause the deviations mentioned above. The purpose of the coupling surface is to couple in the capacitance of a human user. The purpose of the conductive traces is to galvanically connect the touch points with the coupling surface or among each other. Thus, these elements are needed for functionality reasons, but they are not supposed to interact with the touch screen themselves. It would be appreciated by a person skilled in the art, if these necessary, but interfering elements did not influence the detection process of the desired elements, i.e. the touch points, or if the capacitive impact of the necessary, but interfering elements on the touch screen was reduced significantly compared to the impact of the touch points. In the context of the present application, the difference in capacitance between the desired elements, i.e. the touch points, and the necessary, but interfering elements, i.e. the coupling area and the conductive traces, is referred to as capacitive contrast.

The object of the invention is to provide an information carrier with enhanced capacitive contrast between the desired elements on the one hand and the necessary, but interfering elements on the other hand which overcomes the disadvantageous and drawbacks of the information carriers known from the prior art. The object is achieved by the independent claims. Advantageous embodiments result from the dependent claims.

Summary of the invention

The present invention relates to a capacitive, planar information carrier comprising an electrically non-conductive substrate made from an absorbing material, a partially applied, electrically non-conductive mask layer and at least one electrically conductive layer. The preferred information carrier according to the present invention is characterized in that the electrically non-conductive mask layer covers the electrically non-conductive substrate of the information carrier only partially, creating gaps where the substrate is not covered by the electrically non-conductive mask layer. The mask layer is electrically isolating and dielectric. It covers part of the substrate of the information carrier, leaving out certain, pre-defined sectors which are referred to as gaps in the context of the present invention. The purpose of the mask layer is to keep the at least one electrically conductive layer which is applied on top of the mask layer from penetrating into the absorbing substrate. In the context of the present invention, this function is referred to as the blocking function of the mask layer. As the mask layer is partially applied on the substrate of the information carrier, it can also be referred to as a structured mask layer. The expression "partially applied" and "structured" will be used synonymously in the context of the present application.

The information carrier according to the invention is also characterized in that the at least one electrically conductive layer is applied on top of the mask layer so that the material of the electrically conductive layer fills the gaps and covers at least partially the electrically non-conductive mask layer. It is preferred that the at least one electrically conductive layer is applied to the substrate after the application of the mask layer. The electrically conductive layer therefore covers the structure which is obtained by the application of the mask layer to the substrate of the information carrier. This structure comprises both the partially applied mask layer and the gaps. It is preferred that the mask layer is covered only partially by the electrically conductive layer. In particular, it is preferred that the electrically conductive layer is applied in a structured manner onto the mask layer. In the sense of the present invention, application in a structured manner is used for a layer that covers an underlying layer partially, but not completely. In this application, the terms "applied in a structured manner" and "partially applied" will be used synonymously. It is also preferred that the information carrier has a front side and a back side. The front side of the information carrier is referred to as A-side and the back side of the information carrier is referred to as B-side of the information carrier. The corresponding expressions are used synonymously in the description of the present invention. In one preferred embodiment of the invention, the mask layer and the electrically conductive layer are applied to the front side of the information carrier. It can also be preferred that these layers are applied to the back side of the information carrier.

It may be preferred that the information carrier according to the present invention is connected to an object or that the object itself serves as a substrate. An object in the sense of the present invention is in particular a thing, an article or an entity. It may also be preferred that the information carrier is connected to or serves as a part of a package. The attachment or application can be effected, for example, self-adhesively, or by means of other known joining technologies or auxiliaries. Advantageously, the invention enables for a large variety of applications by its flexibility.

In another preferred embodiment, the invention relates to an information carrier where an additional graphic overprint is printed on top of the uppermost electrically conductive layer of the information carrier. Information carriers with an additional graphic overprint can be used in very different applications. Advantageously, the graphic overprint covers the components of the touch structure, so that the use of the information carrier is independent of the structure of the electrically conductive elements. It was very surprising that an information carrier can be provided so that the graphic overprint does not affect the functionality of the electrically conductive elements.

In another preferred embodiment of the invention, the material of the electrically conductive layer penetrates into the upper most layers of the absorbing substrate in the gaps. It is preferred that substrate of the information carrier consists of an absorbing material. In the context of the present invention, the term "absorbing" stands for taking or sucking in the material of the electrically conductive layer so that it is present not only on top of the surface of the substrate and on top of the mask layer, but also in the upper most layers of the substrate. It was totally surprising that an information carrier can be provided where the electrically conductive material can penetrate up to 10 $\mu$m into the substrate. This depth of about 10 $\mu$m is referred to as penetration depth in the context of the present application. The volume of the substrate that takes or sucks in the electrically conductive ink or material of the electrically conductive layer is referred to as penetration volume.

When, for example, the mask layer and the electrically conductive layer are applied to the front side of the information carrier and the information carrier is brought into contact with a touch screen facing the back side of the information carrier, the distance between the touch screen and the material which has penetrated into the absorbing substrate, is reduced by preferably 10 $\mu$m. As reducing the distance between two elements leads to an increase in the capacitance between these elements, the capacitive impact of the gap areas of the information carrier can be increased in comparison to those areas which are covered by the mask layer. This effect can be deduced from the formula for the capacitance C of a parallel-plate capacitor:

$$C = \varepsilon_0 \cdot \varepsilon_r \cdot \frac{A}{d} \qquad \text{(formula A )}$$

$C$... capacitance
$\varepsilon_0$ ... vacuum permittivity ($\varepsilon_0$ = 8,854 · 10$^{-12}$ F/m)
$\varepsilon_r$ ... relative permittivity of the material
$A$ ... area of the parallel-plate capacitor
$d$ ... distance of the plates in the parallel-plate capacitor

As the distance $d$ can be found in the denominator of the equation and as $\varepsilon_0$ is a constant, the capacitance $C$ can be increased by increasing the relative permittivity $\varepsilon_r$ or the area $A$ or by decreasing the distance $d$. In the context of the present invention, the area $A$ refers to the dimension of the gaps and is constant as the gaps have a constant area. In the context of the present invention, the distance $d$ refers to the distance between an electrically conductive element to be detected by a touch screen and the surface of a touch screen, on which the information carrier is placed. In the prior art, this distance d is constant for all electrically conductive elements of an information carrier as they form a single, uniform layer having the same distance to a touch screen.

It was totally surprising and represents a turning away from what used to be common in the prior art to enhance the capacitive contrast in a system comprising an information carrier and a touch screen by manipulating the information carrier. A person skilled in the art would rather have tried to improve the recognition software running on the device comprising a touch screen and not thought of changing the build-up of the information carrier. The deviations of the information carrier according to the present invention compared to the information carrier known from the prior art are easy to realize in the manufacture process. This allows for a simple production in a cost efficient manner without having to adapt the production processes used for the information carriers known from the prior art. Furthermore, the accuracy of the reading process can be enhanced by providing an information carrier wherein the desired and interfering elements have different distances to the touch screen, leading - according to formula A - to different capacitances $C$ recognized by the touch screen electrodes. This is due to the lack of deviations caused by the conductive traces which cause a shift of the detected position of the touch points compared to their physical positions.

The effect of the enhanced capacitive impact is illustrated in the following example: Given the vacuum permittivity $\varepsilon_0$ = 8.85·10$^{-12}$ F/m, the relative permittivity $\varepsilon_r$ = 3 for paper or card board, and the area $A$ = 50,3·10$^{-6}$ m$^2$ as the dimension of an average touch point, the capacitance $C_1$ or the capacitive impact of the necessary, but interfering elements on the front side of the information carrier can be calculated to be

$$C1 = 8,85 \cdot 10^{-12} \cdot \frac{F}{m} \cdot 3 \cdot \frac{50,3 \cdot 10^{-6} m^2}{300 \cdot 10^{-6} m} = 4,45 \cdot 10^{-12} F$$

if the information carrier is read out from the back side of the information carrier and the distance d is supposed to be $d$ = 300 $\mu$m corresponding to an average thickness of the substrate material of the information carrier. If, instead of the distance $d$, an effective distance $d_{eff}$ is used for the touch points which can be approximated to be $d_{eff}$ = 290 $\mu$m, the capacitance $C_2$ or the capacitive impact changes to

$$C2 = 8{,}85 \cdot 10^{-12} \cdot \frac{F}{m} \cdot 3 \cdot \frac{50{,}3 \cdot 10^{-6} m^2}{290 \cdot 10^{-6} m} = 4{,}61 \cdot 10^{-12} F.$$

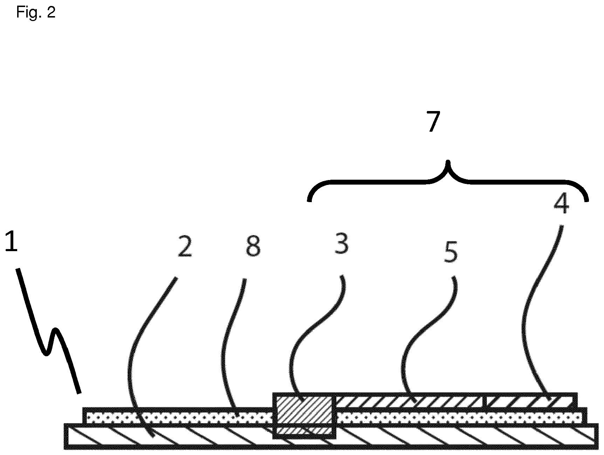

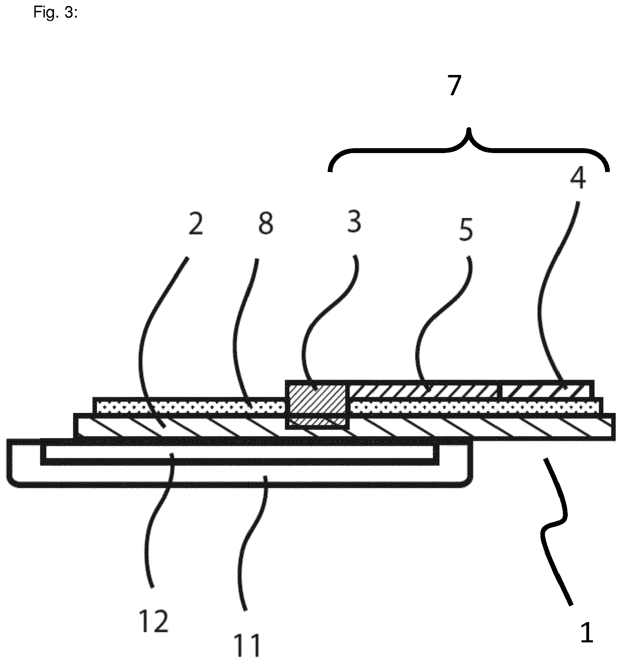

The distance $d_{eff}$ = 290 $\mu$m used in this equation corresponds to the thickness of the substrate which is about 300 $\mu$m reduced by the penetration depth of about 10 $\mu$m. As can be seen from figure 2, the electrically conductive material penetrates into the substrate, thus bringing the touch points nearer to the back side of the information carrier. If the information carrier is placed on top of a touch screen facing said screen with the back side, as can be seen from figure 3, the touch screen bearing device will receive a stronger capacitive signal from the touch points compared to the signal from the interfering elements, i.e. the conductive traces and the coupling area.

Thus, a ratio $C_2/C_1$ of 1,04 can be achieved when comparing the capacitance $C_2$ of an information carrier according to the present invention to the capacitance $C_1$ of a prior art information carrier. It was totally surprising that an increase of 4 % of capacitance compared to the prior art can be achieved by applying the build-up according to the present invention to an information carrier.

In another embodiment of the invention, it is preferred that the gaps have an essentially circular area and the elements obtained by filling the gaps with the material of the electrically conductive layer correspond to the touch points described in the prior art. The gaps filled with the electrically conductive material which are referred to as touch points represent the electrically conductive elements of the information carrier whose detection is desired. It is preferred that their detection triggers events on a touch screen. The touch points comprise both the gaps filled with the electrically conductive material, and the electrically conductive material which has been absorbed by the substrate of the information carrier. It has been shown that these touch points are capable of imitating the properties of fingertips surprisingly well. Thus, the information carrier according to the present invention can be used as an additional input means, next to a finger or a stylus.

In another embodiment, the invention relates to an electrically conductive layer of the information carrier comprising electrically conductive traces and a coupling area. It is preferred that the electrically conductive traces and the coupling area are present on top of the mask layer and that the electrically conductive material forming the conductive traces and the coupling area does not penetrate into the substrate due to the mask layer. It was totally surprising that a mask layer can be provided which has a blocking function and keeps the electrically conductive material from being absorbed into the substrate.

It is preferred that both the touch points, the conductive traces and the coupling area are formed by the same electrically conductive layer. The electrically conductive layer consists of the touch points, the conductive traces and the coupling area which form a touch structure. It was very surprising that this electrically conductive layer can be applied in one production step. This reduces the production efforts and the costs for the production of the information carrier according to the present invention.

By applying the elements of the touch structure, i.e. the touch points, the conductive traces and the coupling area, in one production step as one electrically conductive layer, the conductive traces and the coupling area are located on top of the mask layer. Advantageously, the touch points consist of the filling of the gaps and the electrically conductive material which penetrates into the substrate. In this way, the effective distance of the touch points to the surface of a reading device, i.e. a touch screen, is diminished compared to the conductive traces and the coupling area. This leads to an enhanced capacitive contrast between the different components of the touch structure.

The touch points of the information carrier are electrically linked by the conductive traces. It is preferred that all touch points are electrically linked to each other. It can also be preferred that the touch points form a chain and that only adjacent touch points are linked to each other. The purpose of the coupling area is to couple in a capacitance of a human user into the electrically conductive elements of the information carrier. Coupling area and conductive traces form those electrically conductive elements of the information carrier which can be referred to as necessary, but interfering elements. It is preferred that they are not detected by a touch screen, nor trigger events on it. Only the touch points representing the electrically conductive elements whose detection is desired are supposed to be detected by a touch screen and trigger events.

Preferably, the coupling area is an area of generally conductive material on the information carrier. It is electrically linked via conductive traces to one or more of the touch points so that the linked areas have the same electric potential as the coupling area. The coupling area is preferably easily accessible by a human user in order to set the potential of the coupling area onto the potential of a user. The coupling area need not be a closed area, but may comprise a grid of conductive lines or an array of electrically connected structures.

The coupling area can for example be used in such a way that a human user places his finger on the coupling area. Thus, the electrically conductive areas which are electrically linked to this coupling area will have substantially the same electric potential as the finger of a user. This may be advantageous, since touch screens are commonly designed to work with a typical capacity of a human user. It was surprising that the coupling area does not necessarily need to be directly contacted by the finger of a user, since the finger being in close proximity to the coupling area may sufficiently influence the capacity of the coupling area to achieve the desired effect. Thus, the information carrier according to the present invention can be used in a larger number of applications and is more versatile in use.

In another preferred embodiment, the invention relates to an information carrier where the electrically non-conductive substrate is made of absorbing paper or cardboard material. Departing from the prior art where rather smooth surfaces are used as a substrate for printing products in order to prevent ink penetrating into the substrate, the present invention makes use of the absorbing properties of paper or cardboard material. The preferred materials allow electrically conductive ink or material to penetrate into the substrate. It was totally surprising that penetration depth of up to 10 $\mu$m can be achieved by the choice of the preferred absorbing material.

The electrically conductive ink or electrically conductive material penetrates into the substrate at those spots where the substrate is not covered by the mask layer. The mask layer has a blocking function protecting the substrate from the ink or electrically conductive material. Thus, the ink or electrically conductive material only penetrates into the substrate at those spots where the mask layer creates gaps. These gaps are filled by the ink or the electrically conductive material of the electrically conductive layer. The filled gaps in combination with the penetration volume form the touch points whose detection by the touch screen is desired. It was totally surprising that touch points can be arranged both within and on top of the substrate of an information carrier. This arrangement of the touch points enables for a better and more precise recognition of these desired elements because of a stronger capacitive signal. This stronger capacitive signal compared to the signal of the necessary, but interfering elements leads to an enhanced capacitive contrast because the effective distance $d_{eff}$ between the touch point and the touch screen surface is reduced compared to the distance d between the necessary, but interfering elements and the touch screen.

By having the electrically conductive ink or material of the electrically conductive layer penetrate into the substrate, a 3D penetration volume is formed. It was totally surprising that a touch point with a penetration volume of about 0,5 mm$^3$ can be provided. The penetration volume can be calculated by multiplying the circular average area of the touch points which equals 50,3 · 10$^{-6}$ mm$^2$ with the penetration depth which is approximated to be about 10 $\mu$m.

$$V_p = 50{,}3 \cdot 10^{-6} \text{ mm}^2 \cdot 10 \text{ μm} = 0{,}503 \text{ mm}^3$$

In general, thick layers cause stronger capacitive signals than thin electrical conductive layers. In particular, it has been shown that electrically conductive layers which are obtained by letting the electrically conductive ink or material penetrate into the substrate, exhibit surprisingly strong capacitive signals. In another preferred embodiment of the invention, it is preferred that the thickness of the substrate is in a range between 20 to 1 000 $\mu$m, preferably 50 to 500 $\mu$m, most preferably between 100 to 300 $\mu$m. It has been shown that these thicknesses enable for an advantageous penetration of the electrically conductive ink or material of the electrically conductive layer into the substrate. It was very surprising that penetration depths of 1 to 50 % in relation to the thickness of the substrate can be achieved and that these penetration ratios distribute to the solution of the problem of the invention. By letting the electrically conductive ink or material of the electrically conductive layer penetrate into the substrate, the distance $d_{eff}$ between the touch screen and the information carrier according to the present invention can advantageously be reduced and thus the capacitive contrast be enhanced.

The capacitive contrast between the touch points on the one hand and the conductive traces and the coupling area on the other hand are due to the different distances of the desired elements and the necessary, but interfering elements. The effective distance of the touch points corresponds to the thickness of the substrate minus the penetration depth of the electrically conductive ink:

$$d_{eff} = \text{ thickness of the substrate} - \text{penetration depth}$$

The above-mentioned ranges of thicknesses of the substrate have shown to generate the largest enhanced capacitive contrast between the touch points and the necessary, but interfering electrically conductive elements. It was totally surprising that substrates having these ranges of thicknesses can be applied with common printing technologies leading to the desired effect of the enhanced capacitive contrast.

Another advantage of the preferred thicknesses is that the substrates are easy to process and be printed. The preferred thicknesses enable for an effective and economic printing process.

Furthermore, it was totally surprising that an information carrier can be provided where the components of a touch structure, i.e. the touch points, the conductive traces and the coupling area, can be formed in one production step as one electrically conductive layer and that these components have different effective distances to a reading out device, e.g. a touch screen, thus leading to a capacitive contrast between the touch points on the one hand and the coupling area and the conductive traces on the other hand.

In another preferred embodiment of the invention, the electrically non-conductive substrate consists of a flat, flexible, non-conductive material, in particular paper, cardboard, wood-based material, composite, textile, leather or a combination thereof. These materials have shown to be particularly suited for allowing penetration of electrically conductive ink or material of the electrically conductive layer in to the substrate which leads to the enhanced capacitive contrast which is the object of the present invention.

In accordance with another preferred embodiment of the invention, the electrically non-conductive mask layer consists of electrically non-conductive ink. The electrically non-conductive mask layer is advantageously used for partially covering the front side of electrically non-conductive substrate. The areas of the substrate that are not covered by the mask layer are referred to as gaps being predestined to become the touch points of the present invention. The mask layer is covered by an electrically conductive layer forming the coupling area, conductive traces and touch points. The use of electrically non-conductive ink has shown to enlarge the distance between the coupling area and the conductive traces to the back side of the information carrier. It may also be preferred that the mask layer and the electrically conductive material and ink are applied to the back side of the information carrier. Then, the information carrier is read out with the front side facing the surface of the touch screen.

As the information is advantageously read out by facing the touch screen with its back side, the touch screen detects a smaller distance to the touch points compared to the distance of the coupling area and the conductive traces. Therefore, the signal of capacitance of the touch points detected by the touch screen will be stronger compared to the signals of capacitance of the coupling area and the conductive traces. The use of the electrically non-conductive ink advantageously generates a shielding effect reducing the capacitive impact of the necessary, but interfering elements, i.e. the coupling area and the conductive traces, on the touch screen. Furthermore, the distance of the necessary, but interfering elements, i.e. the coupling area and the conductive traces, to the touch screen is enlarged compared to the desired elements, i.e. the touch points. Thus, the use of the electrically non-conductive ink advantageously distributes to the enhanced capacitive contrast between the necessary, but interfering elements and the desired elements. In particular, it is preferred to use electrically non-conductive inks with low $\varepsilon_r$-values.

In another preferred embodiment of the invention, the electrically non-conductive mask layer and the at least one electrically conductive layer are manufactured with additive printing methods selected from a group comprising flexo printing, screen printing, gravure printing, offset printing and/or digital printing. It was totally surprising that common additive printing technologies can be used to produce electrically non-conductive mask layer and the at least one electrically conductive layer with such a high precision and reproducibility. By using the preferred printing technologies, a cost efficient, but highly accurate information carrier can be provided and the production of this information carrier can easily be adapted to different needs according to a large range of applications. The highly flexible use of different printing methods is an advantage of the invention that enables for a large variety of application areas making the information carrier of the present invention a versatile tool in all kind of technology and economic fields.

It is also preferred that the at least one electrically conductive layer consists of materials selected from a group comprising metal layer, layer containing metal particles or nanoparticles, containing electrically conductive particles, in particular carbon black, graphite, graphene, ATO (antimony tin oxide), electrically conductive polymer layer, in particular Pedot:PSS (poly(3,4-ethylenedioxythiophene) Polystyrene sulfonate), PANI (polyaniline), polyacetylene, polypyrrole, polythiophene and/or pentacene or any combination of these. These materials have shown an electric conductivity that allows for being detected by a touch screen when a coupling area is touched by a human user and the capacitance of that user is transferred to the electrically conductive elements which are linked by the conductive traces. Furthermore, elements consisting of these materials enable for galvanically or electrically connecting electrically conductive areas on the information carrier.

It was totally surprising that such a large number of different materials can be used to create the electrically conductive elements of the information carrier, giving way to a great flexibility regarding the production process of the conductive elements. What is more, it is easy to adapt an information carrier according to the present invention to certain applications where pre-defined features have to be met.

Another aspect of the invention relates to a method for the manufacture of an information carrier according to one or more of the preceding claims comprising a front side and the back side comprising the following steps:

a) providing an electrically non-conductive substrate,

b) partial application of an electrically non-conductive mask layer on the front side of the electrically non-conductive substrate, wherein gaps are created by the partial application of the mask layer where the electrically non-conductive substrate is not covered by the electrically non-conductive mask layer,

c) application of the at least one electrically conductive layer on the front side of the information carrier, wherein the electrically conductive material of the electrically conductive layer fills the gaps and covers at least partially the electrically non-conductive mask layer.

It was totally surprising that an information carrier according to the present invention having a complex build-up compared to the information carriers known from the prior art can be produced by such a simple, cost efficient manner.

It is preferred that the electrically non-conductive mask layer is partially applied on the front side of the electrically non-conductive substrate first. By this, the substrate of the information carrier is partly covered and partly not covered with the mask layer. The areas which are not covered with the mask layer are referred to as gaps. After the application of the mask layer, it is preferred that the at least one electrically conductive layer is applied partially on the front side of the information carrier. By this, both the gaps and the at least partially applied mask layer are covered by the electrically conductive ink forming the electrically conductive layer. The gaps filled with the electrically conductive ink form the desired elements, i.e. the touch points. The areas of the mask layer which are covered with the electrically conductive layer form the necessary, but interfering elements of the information carrier, i.e. the coupling area and the conductive traces. It is preferred that some areas of the mask layer are not covered by the electrically conductive layer.

In another preferred embodiment of the invention, the method for the manufacture of the information carrier comprises an optional step of printing a graphic over-print on top of the uppermost electrically conductive layer of the information carrier. By this, the information carrier obtained is more versatile and can be used in many different contexts. Furthermore, the information carrier gets more attractive as the components of the information carrier which are relevant for the functionality can be hidden behind the graphic overprint.

Another aspect of the invention relates to a method for reading out an information carrier according to the previous claims by a touch screen wherein the back side of the information carrier is brought into contact with the touch screen for reading out the information carrier. By reading out the information carrier with the back side of the information carrier facing the touch screen, the distance of the touch screen to the touch points representing the desired elements of the information carrier is smaller than the distance of the touch screen to the coupling area and the conductive traces representing the necessary, but interfering elements of the information carrier. Thus, the capacitance of the touch points which the touch screen detects will advantageously be stronger than the capacitance of the coupling area and the conductive traces. That is why the method for reading out an information carrier wherein the back side of the information carrier faces the touch screen interferes advantageously with the build-up of the information carrier of the present invention and distributes to the solution of the object of the invention.

Another aspect of the present invention relates to the use of an information carrier wherein the electrically conductive material in the gaps generates a local change of capacitance on a touch screen. The change of capacitance on the touch screen is advantageously caused by bringing into contact the touch screen and the information carrier according to the invention wherein the information carrier faces the touch screen with its back side. Preferably, this contact is a static and/or dynamic contact. In the sense of the invention, a static contact is a contact where both the touch screen and the information carrier are in rest. A dynamic contact refers to a contact where at least one of the two devices, i.e. touch screen and information carrier, is in motion.

Seen from the back side of the information carrier, the distance from the touch screen to the touch points is smaller than the distance to the coupling area and the conductive traces. This can be seen from fig. 3. This is due to the fact that the electrically conductive material, for example electrically conductive ink, penetrates into the substrate. The penetration depth of the electrically can be up to 10 $\mu$m. The difference $\Delta$ of the distances is additionally enlarged by the thickness of the electrically non-conductive mask layer and can by calculated to be

$$\Delta = \text{penetration depth} + \text{thickness of mask layer.}$$

When a user touches the coupling area on the front side of the information carrier, both the coupling area, the conductive traces and the touch points are set onto the potential of the user comprising the capacitance of the user. If an information carrier according to the prior art was brought into contact with a touch screen, the touch screen would detect all signals from the electrically conductive elements of the information carrier equally strong. The touch screen would not "see" a difference between the desired, i.e. the touch points, and the necessary, but interfering elements, i.e. conductive traces and coupling area. This identical detection would be the result regardless of which side of the information carrier faces the touch screen.

According to the preferred method for reading out the information carrier, the information carrier is brought in contact with the touch screen in a manner that the back side of the information carrier faces the touch screen. The touch screen is now capable of detecting especially the desired pattern of touch points as their signals are stronger due to the reduced distance to the touch screen. The touch screen also "sees" the necessary, but interfering elements placed on the front side of the information carrier, but the distance d between the necessary, but interfering elements is larger than the effective distance $d_{eff}$ between the touch points and the touch screen, as the touch points form a penetration volume whose distance to the touch screen is smaller compared to the distance of the coupling area and the conductive traces. Thus, the effective distance $d_{eff}$ for the touch points corresponds to the thickness of the substrate minus the penetration depths.

This effective distance $d_{eff}$ is smaller than the real distance between conductive traces and coupling areas on the front side of the information carrier. According to the formula A

$$C = \varepsilon_0 \cdot \varepsilon_r \cdot \frac{A}{d}$$

for the capacitance $C$, a reduced distance d, as achieved for the touch points by replacing the distance d by the effective distance $d_{eff}$, leads to an increased capacitance C and an increased capacitive impact of the touch points on the touch screen.

A touch screen comprises in particular an active circuit. In the sense of the present invention, this circuit is referred to as touch controller. It is connected to a structure of electrodes. These electrodes are usually divided into transmitting and receiving electrodes. The touch controller preferably controls the electrodes in such a way that a signal is transmitted between in each case one or more transmitting electrodes and one or more receiving electrodes. If the touch screen is in a state of rest, this signal is constant. The purpose of a touch screen is in particular the detection of fingers and their position on the surface of the touch screen. By bringing into contact a finger of a user and the surface of a touch screen, the above-mentioned signal is changed as the touch controller detects a change in capacitance in its vicinity. The signal is usually diminished, because the finger takes up part of the signal from the transmitting electrode and only a reduced signal reaches the receiving electrode.

In the present invention, it is now made use of the conductivity of the electrically conductive elements on the front side of the information carrier. If, instead of a finger, an information carrier comprising electrically conductive elements is brought into contact to a touch screen, these conductive elements cause preferably the same effect as a finger, if a coupling area is touched by a user. This desired effect is a change in capacitance which can be detected by the touch controller of the touch screen. As certain desired electrically conductive areas of the information carrier according to the present invention, i.e. the touch points, have a reduced effective distance to the touch screen, their capacitive impact is enhanced compared to the capacitive impact of the necessary, but interfering elements, i.e. the conductive traces and the coupling area.

By virtue of the present invention, the touch screen essentially "sees" the structure formed by the touch points. Preferably, these touch points replicate the arrangement or the properties of finger tips. Replicating the arrangement or the properties of a fingertip means, in the sense of the invention, to execute an input to a touch screen just like a finger, i.e. causing a local change in capacitance which can be detected by the touch controller of the touch screen. It is a well-known fact for a person skilled in the art that an input can be executed on a touch screen with one or more fingers.

The properties of a fingertip that are supposed to be imitated by the touch points comprise the electrical properties, i.e. their conductivity, geometry, size and shape of the touch points, input pressure, and the distance from the touch screen. It was totally surprising that these properties can be used in order to provide an information carrier with enhanced the capacitive impact of the desired touch points compared to the impact of the necessary, but interfering conductive traces and the coupling area.

Brief description of the drawings:

These and other objects, features and advantages of the present invention will best be appreciated when considered in view of the following description of the accompanying drawings:

Fig. 1    shows a side view of an information carrier where steps a and b of the method of manufacture have been carried out, i.e. the electrically non-conductive substrate has been provided and the electrically non-conductive mask layer has been applied to the front side of the substrate.

Fig. 2    shows a side view of an information carrier where the method of manufacture has been completed, i.e. the at least one electrically conductive layer has been applied.

Fig. 3      shows a side view of an information carrier according to the present invention when brought in contact with a touch screen for reading out the information carrier.

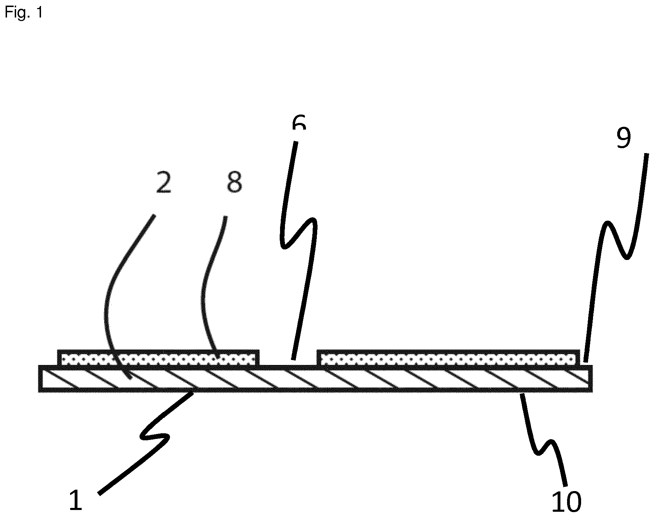

Figure 1 shows a side view of an information carrier (1) according to the present invention where steps a and b of the method of manufacture have been carried out. This means that the electrically non-conductive substrate (2) has been provided and the electrically non-conductive mask layer (8) has been applied to the front side (9) of the substrate (2). Figure 1 shows that the mask layer (8) is partially applied on the front side (9) of the substrate (2) of the information carrier (1). The areas of the substrate (2) where no mask layer (8) is applied are referred to as gaps (6) in the sense of this invention.

Figure 2 shows a side view of an information carrier (1) according to the present invention where all three steps of the method for manufacture have been carried out. The gaps (6) between the partially applied mask layer (8) are filled with electrically conductive ink. As an absorbing substrate is used as a substrate (2) the electrically conductive ink penetrates into the substrate material (2). By this, the effective distance between the back side (10) of the information carrier (1) and the touch point (3) is reduced. According to formula A which can be found in the description of the present invention, a reduced distance leads to an enhanced capacitance C of the electrically conductive element in question. The touch points (3) of the present invention represent the desired elements of the information carrier (1) according to the present invention, as the detection of these touch points (3) is the purpose of the invention. The at least one electrically conductive layer (7) forms the coupling area (4) and the conductive traces (5). They represent the necessary, but interfering elements of the information carrier (1). Their distance to the back side (10) of the information carrier (1) is increased as they are printed on top of the electrically non-conductive mask layer (8). Thus, they have a reduced capacitance compared to the touch points (3).

The difference in capacitance between the touch points (3) on the one hand and the coupling area (4) and the conductive traces (5) on the other hand is referred to as capacitive contrast in the sense of this invention. The capacitive contrast between the desired and the necessary, but interfering elements is increased according to the present invention by making use of different effective distances of these electrically conductive elements. This is realized by the sophisticated built-up of the information carrier (1) according to the present invention.

Figure 3 shows a sight view of an information carrier (1) according to the present invention when brought in contact with a touch screen for reading out the information carrier (1). It can be seen that the information carrier (1) faces the touch screen (12) with the back side (10) by using the information carrier (1) according to the present invention in the manner described, it is made use of the different effective distances of the touch points (3) on the one hand and the coupling area (4) and conductive traces (5) on the other hand.

**List of reference signs:**

1       Capacitive information carrier
2       Electrically non-conductive substrate
3       Electrically conductive layer (touch points)
4       Electrically conductive layer (conductive traces)
5       Electrically conductive layer (coupling area)
6       Gap
7       Electrically conductive layer
8       blocking layer (varnish mask)
9       Front side
10      Back side
11      device with touch screen
12      touch screen

**Claims**

1.  Capacitive, planar information carrier (1), comprising an electrically non-conductive substrate (2) made from an absorbing material, and partially applied, electrically non-conductive mask layer (8) and at least a partially applied electrically conductive layer (7)
    **characterized in that**

        a) the electrically non-conductive mask layer (8) covers the electrically non-conductive substrate (2) only partially, creating gaps (6) where the substrate (2) is not covered by the electrically non-conductive mask layer (8) and

b) the at least one electrically conductive layer (7) is applied on the mask layer (8) so that the material of the electrically conductive layer (7) fills the gaps (6) and covers partially the electrically non-conductive mask layer (8).

2. Information carrier according to claim 1
**characterized in that**
an additional graphic overprint is printed on top of the uppermost electrically conductive layer of the information carrier

3. Information carrier according to claim 1 or 2
**characterized in that**
the material of the electrically conductive layer (7) penetrates into the upper most layers of the absorbing substrate (2) in the gaps (6).

4. Information carrier (1) according to one or more of the preceding claims
**characterized in that**
the gaps (6) have an essentially circular area and the elements obtained by filling the gaps with the material of the electrically conductive layer (7) form touch points (3).

5. Information carrier (1) according to one or more of the preceding claims
**characterized in that**
the material of the electrically conductive layer (7) which is present on the electrically non-conductive mask layer (8) forms conductive traces (4) and a coupling area (5).

6. Information carrier according to one or more of the preceding claims
**characterized in that**
the electrically non-conductive substrate is made of absorbing paper or an absorbing cartoon material.

7. Information carrier (1) according to one or more of the preceding claims
**characterized in that**
the thickness of the substrate (2) is between 20 to 1.000 $\mu$m, preferably 50 to 500 $\mu$m, most preferably between 100 to 300 $\mu$m.

8. Information carrier (1) according to one or more of the preceding claims
**characterized in that**
the electrically non-conductive substrate (2) consists of a flat, non-conductive material, in particular paper, cardboard, wood-based material, composite, textile, leather or a combination thereof.

9. Information carrier (1) according to one or more of the preceding claims
**characterized in that**
the electrically non-conductive substrate (2) is flexible.

10. Information carrier (1) according to one or more of the preceding claims
**characterized in that**
the electrically non-conductive mask layer (8) consists of electrically non-conductive ink.

11. Information carrier (1) according to one or more of the preceding claims
**characterized in that**
the electrically non-conductive mask layer (8) and the at least one electrically conductive layer (7) are manufactured with additive printing methods selected from a group comprising flexo printing, screen printing, gravur printing, offset printing and/or digital printing.

12. Information carrier (1) according to one or more of the preceding claims
**characterized in that**
the at least one electrically conductive layer (7) consists of materials selected from a group comprising metal layer, layer containing metal particles or nanoparticles, containing electrically conductive particles, in particular carbon black, graphite, graphene, ATO, electrically conductive polymer layer, in particular Pedot, PANI, polyacetylene, polypyrrole, polythiophene and/or pentacene or any combination of these.

13. Method for the manufacture of an information carrier (1) according to one or more of the preceding claims comprising a front side (9) and the back side (10) comprising the following steps:

a) providing an electrically non-conductive substrate (2),
b) partial application of an electrically non-conductive mask layer (8) on the front side (9) of the electrically non-conductive substrate (2), wherein gaps (6) are created by the partial application of the mask layer (8) where the electrically non-conductive substrate (2) is not covered by the electrically non-conductive mask layer (8),
c) application of the at least one electrically conductive layer (7) on the front side (9) of the information carrier (1), wherein the electrically conductive material of the electrically conductive layer (7) fills the gaps (6) and covers at least partially the electrically non-conductive mask layer (8).

14. Method according to claim 13
**characterized in that**
an additional graphic overprint is printed on top of the uppermost electrically conductive layer of the information carrier obtained by the method according to claim 13

15. Method for reading out an information carrier (1) according to one or more of the preceding claims by a touch screen (12)
**characterized in that**
the back side (10) of the information carrier (1) is brought in contact with a touch screen (12).

16. Use of an information carrier (1) according to one or more of claims 1 to 12
**characterized in that**
the electrically conductive material in the gaps (6) generates a local change of capacitance on a touch screen (12).


**Patentansprüche**

1. Kapazitiver, ebener Informationsträger (1), umfassend ein elektrisch nichtleitendes Substrat (2) aus einem absorbierenden Material, und teilweise aufgebracht eine elektrisch nichtleitende Maskenschicht (8) und zumindest eine teilweise aufgebrachte elektrisch leitende Schicht (7)
**dadurch gekennzeichnet, dass**

a) die elektrisch nichtleitende Maskenschicht (8) das elektrisch nichtleitende Substrat (2) nur teilweise bedeckt, wodurch Zwischenräume (6) entstehen, an denen das Substrat (2) nicht von der elektrisch nichtleitenden Maskenschicht (8) bedeckt ist, und
b) die zumindest eine elektrisch leitende Schicht (7) auf der Maskenschicht (8) aufgebracht wird, so dass das Material der elektrisch leitenden Schicht (7) die Zwischenräume (6) füllt und die elektrisch nichtleitende Maskenschicht (8) teilweise bedeckt.

2. Informationsträger nach Anspruch 1,
**dadurch gekennzeichnet, dass**
ein zusätzlicher graphischer Überdruck auf die Oberseite der obersten elektrisch leitenden Schicht des Informationsträgers gedruckt wird.

3. Informationsträger nach Anspruch 1 oder 2,
**dadurch gekennzeichnet, dass**
das Material der elektrisch leitenden Schicht (7) in den Zwischenräumen (6) in die obersten Schichten des absorbierenden Substrats (2) eindringt.

4. Informationsträger (1) nach einem oder mehreren der vorstehenden Ansprüche,
**dadurch gekennzeichnet, dass**
die Zwischenräume (6) eine im Wesentlichen kreisförmige Fläche aufweisen und die Elemente, die durch Füllen der Zwischenräume mit dem Material der elektrisch leitenden Schicht (7) erhalten werden, Berührungspunkte (3) bilden.

5. Informationsträger (1) nach einem oder mehreren der vorstehenden Ansprüche,
**dadurch gekennzeichnet, dass**

das Material der elektrisch leitenden Schicht (7), das auf der elektrisch nichtleitenden Maskenschicht (8) vorhanden ist, leitfähige Spuren (4) und einen Verbindungsbereich (5) bildet.

6. Informationsträger nach einem oder mehreren der vorstehenden Ansprüche,
   **dadurch gekennzeichnet, dass**
   das elektrisch nichtleitende Substrat aus absorbierendem Papier oder einem absorbierenden Kartonmaterial gefertigt ist.

7. Informationsträger (1) nach einem oder mehreren der vorstehenden Ansprüche,
   **dadurch gekennzeichnet, dass**
   die Dicke des Substrats (2) zwischen 20 und 1000 $\mu$m, bevorzugt 50 bis 500 $\mu$m, besonders bevorzugt zwischen 100 und 300 $\mu$m beträgt.

8. Informationsträger (1) nach einem oder mehreren der vorstehenden Ansprüche,
   **dadurch gekennzeichnet, dass**
   das elektrisch nichtleitende Substrat (2) aus einem flachen, nichtleitenden Material besteht, insbesondere Papier, Pappe, Material auf Holzbasis, Verbundstoff, Textil, Leder oder eine Kombination aus diesen.

9. Informationsträger (1) nach einem oder mehreren der vorstehenden Ansprüche,
   **dadurch gekennzeichnet, dass**
   das elektrisch nichtleitende Substrat (2) flexibel ist.

10. Informationsträger (1) nach einem oder mehreren der vorstehenden Ansprüche,
    **dadurch gekennzeichnet, dass**
    die elektrisch nichtleitende Maskenschicht (8) aus elektrisch nichtleitender Tinte besteht.

11. Informationsträger (1) nach einem oder mehreren der vorstehenden Ansprüche,
    **dadurch gekennzeichnet, dass**
    die elektrisch nichtleitende Maskenschicht (8) und die zumindest eine elektrisch leitende Schicht (7) mittels additiver Druckverfahren hergestellt werden, ausgewählt aus einer Gruppe bestehend aus Flexodruck, Siebdruck, Gravurdruck, Offsetdruck und/oder Digitaldruck.

12. Informationsträger (1) nach einem oder mehreren der vorstehenden Ansprüche,
    **dadurch gekennzeichnet, dass**
    die zumindest eine elektrisch leitende Schicht (7) aus Materialen besteht, ausgewählt aus einer Gruppe bestehend aus Metallschicht, Schicht mit Metallpartikeln oder Nanopartikeln, mit elektrisch leitenden Partikeln, insbesondere Ruß, Graphit, Graphen, ATO, elektrisch leitende Polymerschicht, insbesondere PEDOT, PANI, Polyacetylen, Polypyrrol, Polythiopen und/oder Pentacen oder eine Kombination aus diesen.

13. Verfahren zur Herstellung eines Informationsträgers (1) nach einem oder mehreren der vorstehenden Ansprüche, umfassend eine Vorderseite (9) und die Rückseite (10), umfassend die folgenden Schritte:

    a) Bereitstellen eines elektrisch nichtleitenden Substrats (2),
    b) teilweises Aufbringen einer elektrisch nichtleitenden Maskenschicht (8) auf der Vorderseite (9) des elektrisch nichtleitenden Substrats (2), wobei Zwischenräume (6) durch die teilweise Aufbringung der Maskenschicht (8) erzeugt werden, an denen das elektrisch nichtleitende Substrat (2) nicht von der elektrisch nichtleitenden Maskenschicht (8) bedeckt ist,
    c) Aufbringen der zumindest einen elektrisch leitenden Schicht (7) auf der Vorderseite (9) des Informationsträgers (1), wobei das elektrisch leitende Material der elektrisch leitenden Schicht (7) die Zwischenräume (6) füllt und die elektrisch nichtleitende Maskenschicht (8) zumindest teilweise bedeckt.

14. Verfahren nach Anspruch 13,
    **dadurch gekennzeichnet, dass**
    ein zusätzlicher graphischer Überdruck auf die Oberseite der obersten elektrisch leitenden Schicht des Informationsträgers, der durch das Verfahren nach Anspruch 13 erhalten wird, gedruckt wird.

15. Verfahren zum Auslesen eines Informationsträgers (1) nach einem oder mehreren der vorstehenden Ansprüche durch einen Berührungsbildschirm (12),

**dadurch gekennzeichnet, dass**
die Rückseite (10) des Informationsträgers (1) mit einem Berührungsbildschirm (12) in Kontakt gebracht wird.

16. Verwendung eines Informationsträgers (1) nach einem oder mehreren der Ansprüche 1 bis 12,
**dadurch gekennzeichnet, dass**
das elektrisch leitende Material in den Zwischenräumen (6) eine lokale Veränderung der Kapazität eines Berührungsbildschirms (12) erzeugt.

**Revendications**

1. Support d'informations plan capacitif (1), comprenant un substrat électriquement non conducteur (2) fait d'un matériau absorbant, et une couche de masque électriquement non conductrice partiellement appliquée (8) et au moins une couche électriquement conductrice partiellement appliquée (7),
**caractérisé en ce que**

a) la couche de masque électriquement non conductrice (8) couvre le substrat électriquement non conducteur (2) seulement partiellement, créant des espaces (6) où le substrat (2) n'est pas couvert par la couche de masque électriquement non conductrice (8) et
b) l'au moins une couche électriquement conductrice (7) est appliquée sur la couche de masque (8) pour que le matériau de la couche électriquement conductrice (7) remplisse les espaces (6) et couvre partiellement la couche de masque électriquement non conductrice (8).

2. Support d'informations selon la revendication 1
**caractérisé en ce que**
une surimpression graphique supplémentaire est imprimée par-dessus la couche électriquement conductrice la plus haute du support d'informations

3. Support d'informations selon la revendication 1 ou 2
**caractérisé en ce que**
le matériau de la couche électriquement conductrice (7) pénètre dans les couches les plus hautes du substrat absorbant (2) dans les espaces (6).

4. Support d'informations (1) selon une ou plusieurs des revendications précédentes,
**caractérisé en ce que**
les espaces (6) possèdent une superficie essentiellement circulaire et les éléments obtenus en remplissant les espaces avec le matériau de la couche électriquement conductrice (7) forment des points tactiles (3).

5. Support d'informations (1) selon une ou plusieurs des revendications précédentes
**caractérisé en ce que**
le matériau de la couche électriquement conductrice (7) qui est présente sur la couche de masque électriquement non conductrice (8) forme des traces conductrices (4) et une zone de couplage (5).

6. Support d'informations selon une ou plusieurs des revendications précédentes
**caractérisé en ce que**
le substrat électriquement non conducteur est fait de papier absorbant ou d'un matériau en carton absorbant.

7. Support d'informations (1) selon une ou plusieurs des revendications précédentes
**caractérisé en ce que**
l'épaisseur du substrat (2) est entre 20 et 1000 $\mu$m, de préférence 50 et 500 $\mu$m, de manière préférée entre toutes entre 100 et 300 $\mu$m.

8. Support d'informations (1) selon une ou plusieurs des revendications précédentes
**caractérisé en ce que**
le substrat électriquement non conducteur (2) est constitué d'un matériau non conducteur plat, en particulier de papier, de carton, de matériau à base de bois, de composite, de textile, de cuir ou d'une association de ceux-ci.

9. Support d'informations (1) selon une ou plusieurs des revendications précédentes

**caractérisé en ce que**
le substrat électriquement non conducteur (2) est flexible.

10. Support d'informations (1) selon une ou plusieurs des revendications précédentes
**caractérisé en ce que**
la couche de masque électriquement non conductrice (8) est constituée d'encre électriquement non conductrice.

11. Support d'informations (1) selon une ou plusieurs des revendications précédentes
**caractérisé en ce que**
la couche de masque électriquement non conductrice (8) et l'au moins une couche électriquement conductrice (7) sont fabriquées avec des procédés d'impression additionnels sélectionnés parmi un groupe comprenant l'impression flexographique, l'impression sérigraphique, l'impression en creux, l'impression en offset et/ou l'impression numérique.

12. Support d'informations (1) selon une ou plusieurs des revendications précédentes
**caractérisé en ce que**
l'au moins une couche électriquement conductrice (7) est constituée de matériaux sélectionnés parmi un groupe comprenant une couche de métal, une couche contenant des particules ou nanoparticules de métal, contenant des particules électriquement conductrices, en particulier du noir de carbone, du graphite, du graphène, de l'ATO, une couche de polymère électriquement conducteur, en particulier de Pedot, de PANI, de polyacétylène, de polypyrrole, de polythiophène et/ou de pentacène ou d'une quelconque association de celles-ci.

13. Procédé pour la fabrication d'un support d'informations (1) selon une ou plusieurs des revendications précédentes, comprenant une face avant (9) et la face arrière (10) comprenant les étapes suivantes :

a) la fourniture d'un substrat électriquement non conducteur (2),
b) l'application partielle d'une couche de masque électriquement non conductrice (8) sur la face avant (9) du substrat électriquement non conducteur (2), dans lequel des espaces (6) sont créés par l'application partielle de la couche de masque (8) où le substrat électriquement non conducteur (2) n'est pas couvert par la couche de masque électriquement non conductrice (8),
c) l'application de l'au moins une couche électriquement conductrice (7) sur la face avant (9) du support d'informations (1), dans lequel le matériau électriquement conducteur de la couche électriquement conductrice (7) remplit les espaces (6) et couvre au moins partiellement la couche de masque électriquement non conductrice (8).

14. Procédé selon la revendication 13
**caractérisé en ce que**
une surimpression graphique supplémentaire est imprimée par-dessus la couche électriquement conductrice la plus haute du support d'informations obtenu par le procédé selon la revendication 13.

15. Procédé pour lire un support d'informations (1) selon une ou plusieurs des revendications précédentes par un écran tactile (12)
**caractérisé en ce que**
la face arrière (10) du support d'informations (1) est mise en contact avec un écran tactile (12).

16. Utilisation d'un support d'informations (1) selon une ou plusieurs des revendications 1 à 12
**caractérisé en ce que**
le matériau électriquement conducteur dans les espaces (6) génère un changement local de capacité sur un écran tactile (12).

Fig. 1

Fig. 2

Fig. 3:

**EP 3 007 109 B1**

**Patent documents cited in the description**

- WO 2011154524 A1